# EUROPÄISCHE PATENTSCHRIFT

(11) **EP 3 968 213 B1**
(45) Veröffentlichungstag und Bekanntmachung des Hinweises auf die Patenterteilung: **29.10.2025**
(21) Anmeldenummer: 20195896.4
(22) Anmeldetag: 14.09.2020
(51) Int. Cl.: G06V 10/25, G06V 20/58, G06V 20/56

(54) **VERFAHREN UND VORRICHTUNG ZUM ERMITTELN EINES GLEISGEBUNDENEN SCHIENENPFADES IN EINER GLEISANLAGE**
METHOD AND DEVICE FOR DETERMINING A TRACK-BOUND RAIL PATH IN A TRACK SYSTEM
PROCÉDÉ ET DISPOSITIF POUR DETERMINER LE CHEMIN D'UN RAIL DANS UNE VOIE FERRÉE

(43) Veröffentlichungstag der Anmeldung: 16.03.2022
(73) Patentinhaber: Siemens Mobility GmbH, 80997 München (DE)
(72) Erfinder: Bleuzé, Benoît, 10405 Berlin (DE); Hartmann, Benjamin, 12489 Berlin (DE); Huang, San-Yu, 12489 Berlin (DE); Sema, Albi, 10115 Berlin (DE); Vidal Migallon, Irina, 10999 Berlin (DE)
(74) Vertreter: Siemens Patent Attorneys

(56) Entgegenhaltungen:
- DE-A1- 102018 208 481
- DE-A1- 102021 123 159
- US-A1- 2019 161 919
- ZENDEL OLIVER ET AL: "RailSem19: A Dataset for Semantic Rail Scene Understanding", 2019 IEEE/CVF CONFERENCE ON COMPUTER VISION AND PATTERN RECOGNITION WORKSHOPS (CVPRW), IEEE, 16 June 2019 (2019-06-16), pages 1221 - 1229, XP033747223, DOI: 10.1109/CVPRW.2019.00161
- PETER HINTZE ET AL: ""Im Plan steht aber ein anderer Kilometer!" - Das Potenzial georeferenzierter Bahninfrastrukturdaten - "But that's not the kilometre in the plan!" - the potential of georeferenced railway infrastructure data", SIGNAL UND DRAHT: SIGNALLING & DATACOMMUNICATION, vol. 110, no. 11, 30 November 2018 (2018-11-30), DE, pages 6 - 15, XP055522312, ISSN: 0037-4997
- ABU ALHAIJA HASSAN ET AL: "Augmented Reality Meets Computer Vision: Efficient Data Generation for Urban Driving Scenes", INTERNATIONAL JOURNAL OF COMPUTER VISION, KLUWER ACADEMIC PUBLISHERS, NORWELL, US, vol. 126, no. 9, 7 March 2018 (2018-03-07), pages 961 - 972, XP036568427, ISSN: 0920-5691, [retrieved on 20180307], DOI: 10.1007/S11263-018-1070-X

## Beschreibung

Verfahren zum Ermitteln eines gleisgebundenen Schienenpfades in einer Gleisanlage und Vorrichtung zur Durchführung dieses Verfahrens

Die Erfindung betrifft ein Verfahren zum Ermitteln eines gleisgebundenen Schienenpfades in einer Gleisanlage, bei dem rechnergestützt
- mit einem Bildsensor Bilddaten der Gleisanlage aufgenommen werden,
- aus den Bilddaten repräsentative Bildausschnitte ermittelt werden,
der Schienenpfad anhand der repräsentativen Bildausschnitte bestimmt wird. Außerdem betrifft die Erfindung eine Überwachungsvorrichtung mit einem Bildsensor und einem an diesen angeschlossenen Computer. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Für die Digitalisierung im Bereich von Schienentransportfahrzeugen ist Software zum autonomen Fahren eine Schlüsselanwendung. Ein grundlegendes Element für die Erfassung der Umgebung und ein modellhaftes Planen einer Fahrstrategie für einen Zug besteht in der bildbasierten Streckendetektion. Genauso wie es ein menschlicher Fahrer durchführen muss, muss eine Software zum autonomen Fahren die Schienen mit Hilfe von Kameras erkennen, die auf der Vorderseite des Fahrzeugs angeordnet sind, und Entscheidungen bezüglich der Steuerung des Fahrverhaltens des Zugs unter-stützen. Die Schienenerkennung anhand von Bildern ist sehr herausfordernd, da viele Umweltbedingungen sich ändern können.

In der DE 10 2018 208 481 ist ein solches Verfahren zur Streckendetektion beschrieben. In den aufgenommenen Bilddaten werden Bildausschnitte ermittelt. Die Lage der Bildausschnitte kann zum Beispiel in Abhängigkeit davon ermittelt werden, wo in den Bilddaten Schienenabschnitte zu erwarten sind. Weiterhin wird ein faltendes neuronales Netzwerk dazu angewendet, die Bildausschnitte danach zu klassifizieren, ob sie einen Schienenabschnitt umfassen oder nicht, und Bildpunktpositionen auf den Schienenabschnitten anhand der entsprechend klassifizierten Bildausschnitte zu ermitteln. Das faltende neuronale Netzwerk weist also zwei unterschiedliche Komponenten auf, von denen eine Komponente eine binäre Klassifikation durchführt, welche Auskunft darüber gibt, ob sich ein Schienenabschnitt in dem klassifizierten Bildausschnitt befindet oder nicht. Ein solches faltendes neuronales Netzwerk kann zum Beispiel anhand von Trainingsdaten dazu trainiert werden, die Bildausschnitte korrekt zu klassifizieren. Eine Zuverlässigkeit des trainierten faltenden neuronalen Netzwerks kann zum Beispiel durch den Einsatz von Testdaten vor dem Einsatz im regulären Betrieb getestet werden. Die zweite Komponente des faltenden neuronalen Netzwerks führt eine Art Landmarkendetektion von Bildpunkten in den Bildausschnitten, welche Teil von Schienenabschnitten sind, durch. Anhand der Kenntnis dieser Bildpunkte kann dann der Verlauf der von dem Schienenfahrzeug befahrenen Schienen abgeschätzt werden.

Trotz Anwendung potenter Analyseverfahren wie neuronalen Netzwerke können Fehler bei der Bildanalyse und daraus resultierend Fehleinschätzungen bei der Steuerung von Schienenfahrzeugen nicht ausgeschlossen werden.

Dokument DE 10 2018 208481 A1 beschreibt ein Verfahren zum Abschätzen eines Verlaufs eines Schienenpfads. Bei dem Verfahren werden Bilddaten von einem vor einem Schienenfahrzeug liegenden Bereich erfasst. Aus den Bilddaten werden Bildausschnitte extrahiert. Weiterhin wird ein faltendes neuronales Netzwerk für ein duales Klassifizieren der Bildausschnitte verwendet.

Dokument ZENDEL OLIVER ET AL: "RaiISem19: A Dataset for Semantic Rail Scene Understanding", 2019 IEEE/CVF CONFERENCE ON COMPUTER VISION AND PATTERN RECOGNITION WORKSHOPS (CVPRW), 16. Juni 2019, Seiten 1221-1229, beschreibt eine Lösung von Aufgaben für autonome Straßenfahrzeuge mithilfe von Computer Vision und betrifft einen ersten öffentlichen Datensatz für semantisches Szenenverständnis für Züge und Straßenbahnen: RailSem19.

US 2019/161919 A1 beschreibt ein Fahrzeug, das Schieneninspektionssensoren umfasst, die zum Erfassen von Wandlerdaten konfiguriert sind. Ferner umfasst die Erfindung einen Prozessor, der zum Empfangen und Verarbeiten der Wandlerdaten in nahezu Echtzeit konfiguriert ist. Das Verarbeiten umfasst die Eingabe der erfassten Wandlerdaten in ein maschinelles Lernsystem. Die Verarbeitung umfasst außerdem den Empfang einer Ausgabe vom maschinellen Lernsystem, wobei die Ausgabe angibt, ob die erfassten Wandlerdaten einen vermuteten Schienenfehler identifizieren. Eine Warnung wird an den Fahrzeugführer übermittelt und enthält die Position des vermuteten Schienenfehlers.

Die Aufgabe der Erfindung besteht darin, ein Verfahren zum Ermitteln eines gleisgebundenen Schienenpfades in einer Gleisanlage und eine für die Durchführung des Verfahrens geeignete Vorrichtung anzugeben, wobei das Verfahren auch bei Weichen eine möglichst geringe Fehlerwahrscheinlichkeit bei der Bilderkennung des Schienenpfades aufweisen soll. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass rechnergestützt
- der Schienenpfad dadurch bestimmt wird, dass der Verlauf der Schienen des betreffenden Gleises als Linienzüge erfasst wird,
- geprüft wird, ob die Linienzüge Lücken in ihrem Verlauf aufweisen,
- besondere repräsentative Bildausschnitte ausgewählt werden, anhand derer die Lücken klassifiziert werden.

Der Vorteil bei dem erfindungsgemäßen Verfahren, bei dem die Schienen als Linienzüge erfasst werden, liegt darin, dass diese auch bei unterschiedlichen Licht- und Wetterverhältnissen sehr zuverlässig ermittelt werden können. Die Schienen sind daher in dem zu verarbeitenden Bild ein vergleichsweise zuverlässiges Kriterium, um den Schienenpfad zu ermitteln. Der Schienenpfad ist nämlich durch die Schienen auf beiden Seiten begrenzt. Die zuverlässige Erkennungsmöglichkeit der Schienen verringert somit auch das Risiko von Fehlinterpretationen durch die bildverarbeitende Software. Auf diese Weise wird die erfindungsgemäße Aufgabe gelöst.

Die Schienen können in dem bildverarbeitenden Verfahren als Linienzüge festgestellt werden. Hierbei muss allerdings beachtet werden, dass Schienen nicht zwangsläufig als zusammenhängende Linienzüge zu erkennen sind, weil diese in dem Bild teilweise durch andere Gegenstände verdeckt sein können. Einer hierdurch entstehenden möglichen Fehlerquelle muss daher entgegengewirkt werden.

Daher ist es erforderlich, nicht nur die Linienzüge festzustellen, sondern auch darin auftretende Lücken, die die Erkennung des Schienenpfades erschweren. Hier setzt die Erfindung an, in dem die besonderen repräsentativen Bildausschnitte, d. h. diejenigen Bildausschnitte, die zu einer Beurteilung der Lücken geeignet sind, herangezogen werden, um die Lücken zu klassifizieren.

Eine Klassifikation der Lücken erfolgt durch einen softwaretechnisch umgesetzten Lücken-Klassifikatator. Dies ist eine Software, die die besonderen repräsentativen Bildausschnitte erkennt, beurteilt und mit möglichen Ursachen für die auftretenden Lücken in einen Zusammenhang stellt (hierzu im Folgenden noch mehr).

Als repräsentative Bildausschnitte werden diejenigen Ausschnitte bezeichnet, welche die für die zu treffende Aussage wichtigen Informationen enthalten. Ein repräsentativer Bildausschnitt beispielsweise für eine Weiche wird also vorzugsweise den Bereich der Weiche abbilden.

Der genannte Lücken-Klassifikator ist somit ein Tool, welches rechnergestützt arbeitet. Die dabei verwendete Software kann vorzugsweise mit einer künstlichen Intelligenz ausgestattet sein und insbesondere ein maschinelles Lernen ermöglichen.

Um die Hauptaufgabe eines autonomen Fahrens von Schienenfahrzeugen zu gewährleisten, reicht es allerdings nicht aus, die Lücken zu klassifizieren. Weiterhin muss das Ergebnis der Untersuchung mit einer Navigation des autonomen Fahrzeugs einhergehen. Während die Kamera (die den Bildsensor enthält) vorzugsweise ein Farbbild der Umgebung aufnimmt, kann eine Bildverarbeitung genutzt werden, um anhand von Erkennungsmerkmalen eine Ortung des Schienenfahrzeugs vorzunehmen. Hierfür ist die Kenntnis der Topologie der Umgebung (Gleisanlage) erforderlich.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden. Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die den erfindungsgemäßen Programmablauf ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Unter künstlicher Intelligenz (im Folgenden auch mit KI abgekürzt) ist im Rahmen dieser Erfindung im engeren Sinne das rechnergestützte Machine Learning (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt und erlernt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit spezifischeren Anwendungen, zum Beispiel Regression und Klassifikation, Strukturerkennung und -vorhersage, Datengenerierung (Sampling) oder autonomes Handeln.

Beim überwachten Lernen wird das System durch den Zusammenhang von Eingabe und zugehöriger Ausgabe bekannter Daten trainiert und erlernt auf diese Weise approximativ funktionale Zusammenhänge. Dabei kommt es auf die Verfügbarkeit geeigneter und ausreichender Daten an, denn wenn das System mit ungeeigneten (z.B. nicht-repräsentativen) Daten trainiert wird, so lernt es fehlerhafte funktionale Zusammenhänge. Beim unüberwachten Lernen wird das System ebenfalls mit Beispieldaten trainiert, jedoch nur mit Eingabedaten und ohne Zusammenhang zu einer bekannten Ausgabe. Es lernt, wie Datengruppen zu bilden und zu erweitern sind, was typisch für den Anwendungsfall ist und wo Abweichungen bzw. Anomalien auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Das maschinelle Lernen kann beispielsweise durch künstliche neuronale Netze (im Folgenden für artificial neural network, kurz ANN genannt) durchgeführt werden. Künstliche neuronale Netze basieren meist auf der Vernetzung vieler Neuronen, beispielsweise McCulloch-Pitts-Neuronen oder leichter Abwandlungen davon. Grundsätzlich können auch andere künstliche Neuronen Anwendung in ANN finden, z. B. das High-Order-Neuron. Die Topologie eines Netzes (die Zuordnung von Verbindungen zu Knoten) muss abhängig von seiner Aufgabe bestimmt werden. Nach der Konstruktion eines Netzes folgt die Trainingsphase, in der das Netz "lernt". Dabei kann ein Netz beispielsweise durch folgende Methoden lernen:
Entwicklung neuer Verbindungen Löschen existierender Verbindungen Ändern der Gewichtung (der Gewichte von Neuron j zu Neuron i) Anpassen der Schwellenwerte der Neuronen, sofern diese Schwellwerte besitzen Hinzufügen oder Löschen von Neuronen Modifikation von Aktivierungs-, Propagierungs- oder Ausgabefunktion
Außerdem verändert sich das Lernverhalten bei Veränderung der Aktivierungsfunktion der Neuronen oder der Lernrate des Netzes. Praktisch gesehen lernt ein ANN hauptsächlich durch Modifikation der Gewichte der Neuronen. Eine Anpassung des Schwellwertes kann hierbei durch ein on-Neuron miterledigt werden. Dadurch sind ANN in der Lage, komplizierte nichtlineare Funktionen über einen Lernalgorithmus, der durch iterative oder rekursive Vorgehensweise aus vorhandenen Ein- und gewünschten Ausgangswerten alle Parameter der Funktion zu bestimmen versucht, zu erlernen. ANN sind dabei eine Realisierung des konnektionistischen Paradigmas, da die Funktion aus vielen einfachen gleichartigen Teilen besteht. Erst in ihrer Summe wird das Verhalten komplex.

An dieser Stelle soll insbesondere auf die Vorteile von faltenden neuronalen Netzen für autonomes Fahren und Gleiserkennung hingewiesen werden. Die faltenden neuronalen Netze lernen anhand einer Mehrzahl von annotierten Beispieldaten, welche Bildausschnitte eine (oder zwei) Schiene(n) beinhalten und welche nicht. Durch die große Menge von solchen Trainingsdaten wird das Netzwerk im Trainings-schritt dazu gebracht, die typischen bildbasierten Merkmale "zu lernen" bzw. abzuspeichern. Da das faltende neuronale Netz anhand von realen Beispielen mit verschiedenen Wetterbedingungen, Gleisbetten, Beleuchtungswinkeln trainiert wird, lernt es die Merkmale, die für die gleisbein-haltenden Bildabschnitte unabhängig von den oben genannten externen Einflüssen allgemein sind. Dadurch kann es später Gleisabschnitte in den neuen, vorher ungesehenen Bildaus-schnitten erkennen. Im Gegensatz zu klassischen Bildverarbeitungsansätzen oder anderen Verfahren des maschinellen Lernens, muss der Entwickler die Merkmale (die so genannten Features) nicht selbst entwerfen, sondern das faltende neuronale Netz lernt diese selbst anhand der bereitgestellten Beispiele. Durch die aus umfangreichen reellen Trainingssätzen erlernten Features mit verschiedenen ex-ternen Einflüssen generalisieren die faltenden neuronalen Netze viel besser als andere Verfahren des maschinellen Lernens. Einen weiteren Vorteil der faltenden neuronalen Netze gegenüber anderen Ansätzen des maschinellen Lernens stellt die Möglichkeit dar, diese mit hoher Effizienz auf GPUs (Graphic Processing Units) auszuführen. Trotz der Menge und der Komplexität der gespeicherten erlernten Informationen lassen sich die faltenden neuronalen Netze mit Echt-zeit-Geschwindigkeit ausführen und eignen sich deshalb besonders gut für ADAS-Systeme. Die in der vorliegenden Anmeldung vorgestellten weiteren Performance-Optimierungen (wie z.B. intelligente Suche des Klassifikations-Fensters mit dem Ergebnis aus dem vorherigen Zeitpunkt und der perspektivischen Verzerrung) lassen es zu, die Ausführzeit weiter zu reduzieren. Dadurch ist es erst möglich, den Schienenverlauf mit solch einer hohen Frequenz, die eine hohe Stabilität des Verfahrens und mit menschlicher Wahrnehmung vergleichbare Ergebnisse gewährleistet, zu detektieren und zu verfolgen.

Gemäß einer Ausgestaltung der Erfindung ist vorgesehen, dass die besonderen repräsentativen Bildausschnitte derart ausgewählt werden, dass diese mindestens eine Lücke enthalten.

Diese besonderen repräsentativen Bildausschnitte sind in besonderer Weise geeignet, um eine Klassifikation der erfassten Lücken vorzunehmen. Hierbei kann nach weiteren Merkmalen in den repräsentativen Bildausschnitten gesucht werden, welche Aufschluss darüber geben, auf welche Weise die Lücke in dem Linienzug entsteht.

Gemäß einer Ausgestaltung der Erfindung ist vorgesehen, dass der Bildsensor in oder auf einem Schienenfahrzeug eingesetzt wird und mit dem Bildsensor Bilddaten des vor dem Schienenfahrzeug liegenden Teils der Gleisanlage aufgenommen werden.

Der Einbau des Bildsensors in ein Schienenfahrzeug ist besonders vorteilhaft, um für dieses zu ermitteln, ob der vorgesehene Schienenpfad beispielsweise durch die auf ihm liegenden Weichen richtig gestellt wurde oder frei von Hindernissen ist (hierzu im Folgenden noch mehr). Grundsätzlich könnte der Bildsensor in der Gleisanlage allerdings auch fest installiert sein, um beispielsweise einen besonders frequentierten Gleisabschnitt dauerhaft zu überwachen. In diesem Falle müsste der Bildsensor beispielsweise in ein Stellwerk implementiert sein, sodass durch diese Warnungen an fahrende Schienenfahrzeuge weitergegeben werden können.

Gemäß einer Ausgestaltung der Erfindung ist vorgesehen, dass ein ermittelter Schienenpfad auf eine Übereinstimmung mit einem Referenzschienenpfad in einer virtuellen Referenzrealität verglichen wird.

Der äquivalente Schienenpfad ist erfindungsgemäß somit der durch die virtuelle Realität definierte Bereich, der in der Realität dem zu ermittelnden Schienenpfad entspricht. Dieser wird durch die virtuelle Realität topologisch definiert, beispielsweise durch die Erzeugung einer Punktewolke.

Die Technologie zur Erzeugung von virtuellen Realitäten ist an sich bekannt. Mit einem dafür ausgestatteten Schienenfahrzeug kann beispielsweise eine Messfahrt über die Gleisanlage vorgenommen werden und die so aufgenommenen Bilder in eine virtuelle Realität umgesetzt werden.

Werden anschließend mit dem erfindungsgemäßen Verfahren weitere Bilder der Realität aufgenommen, so können diese mit den vorliegenden Bildern der virtuellen Realität verglichen werden. Auf diese Weise ist eine zuverlässige und genaue Ortung des Fahrzeugs möglich. Sobald die Perspektive des aktuell aufgenommenen Bildes mit der virtuellen Realität in Deckung gebracht werden kann, ist eine zuverlässige Ortung des Schienenfahrzeugs möglich, da hieraus der Blickwinkel und die Position der Kamera anhand des aktuell aufgenommenen Bildes berechnet werden kann.

Gemäß einer Ausgestaltung der Erfindung ist vorgesehen, dass bei dem Vergleichen des ermittelten Schienenpfades mit dem Referenzschienenpfad geprüft wird,
- ob die Schienen in den Bilddaten derart als Linienzüge erfasst wurden, dass die Linienzüge die in Bezug auf die virtuelle Realität zu erwartende Länge aufweisen, oder
- ob mindestens einer dieser Linienzüge unerwartete Lücken aufweist, die diesen mindestens einen Linienzug in Bezug auf seine zu erwartende Länge unterbrechen.

Hierbei ergibt sich ein weiterer Vorteil, wenn die aufgenommenen Bilder mit einer virtuellen Realität verglichen werden. Hierdurch ist es nämlich möglich, festzustellen, warum die Linienzüge der Aufnahme eventuell nicht durchgehend sind. Insbesondere können Hindernisse in der virtuellen Realität ausgemacht werden, die unbeweglich sind und daher immer zu einer Lücke im Linienzug führen werden, wenn diese bezogen auf den Blickwinkel der Kamera sozusagen im Weg stehen. Wird ein solches Hindernis erkannt, so kann daraus geschlossen werden, dass die Lücke keine negativen Konsequenzen für eine Navigation insbesondere eines autonomen Schienenfahrzeuges hat und in Folge dessen der Linienzug zur Schließung der Lücke interpoliert werden kann. Anschließend ist die Ermittlung des Gleisbereiches möglich, der von den Schienen (d. h. den ermittelten Linienzügen) abhängig ist. Diese Art von Lücken sollen im Folgenden als erwartete Lücken bezeichnet werden.

Gemäß einer Ausgestaltung der Erfindung ist vorgesehen, dass eine Ausgabe erfolgt, wenn mindestens ein Linienzug eine unerwartete Lücke aufweist.

Als Ausgabe soll ein Verfahrensschritt verstanden werden, der unter Ausnutzung einer Schnittstelle ein Signal oder Daten ausgibt, die zur weiteren Untersuchung der unerwarteten Lücke geeignet sind oder die Erforderlichkeit von Gegenmaßnahmen anderer Art signalisiert. Solche Gegenmaßnahmen können darin bestehen, dass ein autonom fahrendes Fahrzeug oder auch ein anderes Fahrzeug angehalten wird, da die unerwartete Lücke ein Sicherheitsrisiko darstellen kann.

Als unerwartete Lücken sollen Lücken bezeichnet werden, deren Vorhandensein an der bezeichneten Stelle nicht ohne weiteres erwartet werden kann. Dies kann, wie bereits erläutert, durch einen Abgleich mit einer virtuellen Realität geprüft werden. Bei der virtuellen Realität handelt es sich beispielsweise um einen Streckenplan. Die virtuelle Realität kann daraufhin untersucht werden, ob die Lücke, wie bereits beschrieben, aufgrund von bekannten Hindernissen im Linienzug der Schiene zu erkennen ist.

Gemäß einer Ausgestaltung der Erfindung ist vorgesehen, dass die ermittelte Lücke als Hindernis interpretiert wird.

Eine Interpretation der Lücke als Hindernis erfolgt insbesondere dann, wenn es sich bei der Lücke um eine unerwartete Lücke handelt. Die Lücke kann beispielsweise durch ein auf dem Gleis stehendes Fahrzeug erzeugt werden, da dieses den Blick auf die Schienen teilweise verwehrt. Es ist aber auch möglich, dass auf den Gleisen ein Gegenstand liegt, beispielsweise ein umgestürzter Baum oder verlorene Ladung. In solchen Fällen muss eine Gegenmaßnahme eingeleitet werden. Zu diesem Zweck ist es vorteilhaft, die Lücke als Hindernis zu interpretieren.

Da die Lokalisation des Hindernisses durch das bildgebende Verfahren ebenfalls berechnet werden kann, ist es auch möglich, als Gegenmaßnahme beispielsweise die Räumung des entsprechenden Streckenabschnittes von Hindernissen durchzuführen. Hierbei können Einsatzkräfte zur Beseitigung des Hindernisses gezielt zum Ort des Hindernisses ausgesendet werden.

Handelt es sich bei dem Hindernis um ein anderes Schienenfahrzeug, so kann als Gegenmaßnahme auch ein Abgleich mit einem vorliegenden Fahrplan durchgeführt werden. Sollte das Schienenfahrzeug planmäßig an der Stelle stehen, so handelt es sich an sich um ein eine erwartete Lücke, so dass keine Gegenmaßnahmen eingeleitet werden müssen. Es muss lediglich gewartet werden, bis das Schienenfahrzeug nicht mehr als Hindernis im Weg steht.

Allerdings kann es sich auch herausstellen, dass das Schienenfahrzeug an der bezeichneten Stelle nicht stehen dürfte. Dies ist beispielsweise dann der Fall, wenn es sich um einen verlorenen Güterwaggon handelt. Solche Hindernisse können beispielsweise in einem Rangierbahnhof auftreten, wenn ein Entkopplungsprozess oder Kopplungsprozess nicht fehlerfrei durchgeführt werden konnte. In diesem Fall ist das erfindungsgemäße Verfahren somit ein geeignetes Werkzeug, um Unfälle auf Rangierbahnhoföfen zu vermeiden.

Gemäß einer Ausgestaltung der Erfindung ist vorgesehen, dass die Ausgabe eine Information enthält, dass auf dem Schienenpfad ein Hindernis vorhanden ist.

Diese Information kann, wie bereits beschrieben, verwendet werden, um geeignete Gegenmaßnahmen einzuleiten. Insbesondere kann ein autonomes Schienenfahrzeug abgebremst werden, um eine Kollision mit dem Hindernis zu vermeiden. Hierfür ist eine Information erforderlich, die die Tatsache eines im Schienenpfad liegenden Hindernisses enthält. Diese Information wird dann durch das autonom fahrende Schienenfahrzeug ausgewertet. Hierzu steht in dem Schienenfahrzeug eine autonome Steuerung zur Verfügung.

Es ist aber auch möglich, dass die Information in einem Stellwerk ausgewertet wird um einen gewöhnlichen (d. h. nicht autonomen) Schienenverkehr zu beeinflussen. Die Information wird durch das Stellwerk dann an all jene Schienenfahrzeuge weitergegeben, welche von dem Hindernis bei der Weiterfahrt betroffen sind. Erfindungsgemäß ist vorgesehen, dass
- besondere repräsentativen Bildausschnitte ermittelt werden, die die Anwesenheit von Weichen im Schienenpfad repräsentieren,
- die besonderen repräsentativen Bildausschnitte hinsichtlich einer Weichenstellung ausgewertet werden, und so die Weichenstellung ermittelt wird,
- der Schienenpfad unter Berücksichtigung der Weichenstellung ermittelt wird.

Die zuverlässige Erkennung von Weichen ist vorteilhaft besonders wichtig, wenn ein Schienenpfad zuverlässig ermittelt werden soll. Es ist nämlich erforderlich, mit der Bildauswertung zu entscheiden, ob an einer Weiche der Schienenpfad nach rechts oder nach links verläuft. Nur so kann zuverlässig vorausbestimmt werden, welchen Schienenpfad das Fahrzeug nehmen wird.

Gemäß einer Ausgestaltung der Erfindung ist vorgesehen, dass als besonderer repräsentativer Bildausschnitt die Bilddaten eines Weichensignals ausgewertet werden.

Das Weichensignal gibt Aufschluss über die eingestellte Weichenstellung. Wenn dieses erfasst wird, kann daraus eine Weichenstellung abgeleitet werden. Auch kann das Weichensignal nur herangezogen werden, um festzustellen, dass sich in diesem Teil der Gleisanlage eine Weiche befindet. Dies kann zum Anlass genommen werden, den dort verlaufenden Linienzug genauer zu untersuchen. Mit anderen Worten gilt es, die geeigneten besonderen repräsentativen Bildausschnitte für die Weiche zu finden und auszuwählen (hierzu im Folgenden noch mehr).

Erfindungsgemäß ist vorgesehen, dass als besonderer repräsentativer Bildausschnitt die Bilddaten mindestens einer Weichenzunge einer Weiche ausgewertet werden.

Anders, als das Weichensignal, zeigt die Weichenzunge vorteilhaft zuverlässig die Weichenstellung an. Es kann nämlich sein, dass das Weichensignal einmal hängenbleibt und aufgrund dieser Tatsache eine falsche Weichenstellung angezeigt wird. Anders verhält es sich mit der Weichenzunge. Wenn diese umgestellt wird, lässt sich das durch eine geeignete Auswertung des zugehörigen besonderen repräsentativen Bildausschnitts zweifelsfrei ermitteln. Sollte es bei der Weichenstellung also zu einer fehlerhaften Stellung kommen, so lässt sich dies anhand der besonderen repräsentativen Bildausschnitte ermitteln.

Erfindungsgemäß ist vorgesehen, dass zum Ermitteln des Schienenpfades berücksichtigt wird, ob die mindestens eine Weichenzunge an der Schiene anliegt oder von dieser eine Lücke aufweist.

Vorteilhaft kann nämlich das erfindungsgemäße Verfahren insbesondere dazu genutzt werden, Lücken im Linienzug zu ermitteln, die dadurch zustande kommen, dass Weichen über Weichenzungen gestellt werden. Die Weichenzungen liegen nämlich jeweils an der Schiene an, von welcher das Rad in die durch die Weiche gestellte Richtung geführt werden soll. Am gegenüberliegenden Gleis liegt die andere Weichenzunge demnach nicht an, so dass das gegenüberliegende Rad an der Weichenzunge vorbeigeführt werden kann.

Somit muss bei einer korrekt gestellten Weiche immer eine Weichenzunge anliegen und die andere nicht. Eine Fehlstellung der Weiche dahingehend, dass die Weichenzungen an keiner der beiden Schienen anliegt, kann somit ermittelt werden. Ebenso kann eine zulässige Weichenstellung ermittelt werden.

Hierzu wird ermittelt, welche Weichenzunge eine Lücke zur zugehörigen Schiene aufweist. Dies lässt sich in der bereits beschriebenen erfindungsgemäßen Weise dadurch ermitteln, dass Linienzüge entlang der Schienen des zu untersuchenden Gleises ermittelt werden, wobei diese in dem Fall, dass die Weichenzunge anliegt weitergeführt werden können und in dem Fall, dass die Weichenzunge nicht anliegt, eine Lücke aufweisen.

Korreliert die ermittelte Lücke mit der erwarteten Weichenstellung, so ist keine Maßnahme erforderlich, das Schienenfahrzeug kann die Weiche passieren. Hierbei handelt es sich dann um eine erwartete Lücke.

Bei einer falschen Weichenstellung wird allerdings eine unerwartete Lücke ermittelt: nämlich auf derjenigen Seite, wo die Weichenzunge eigentlich anliegen sollte und somit ein geschlossener Linienzug vorliegen sollte. Dies wird gewöhnlich dann der Fall sein, wenn die Weiche falsch gestellt ist, also das Fahrzeug in die andere Richtung leiten würde. Eine Fehlstellung kann jedoch auch vorliegen, wenn die Weiche beim Stellen hängenbleibt und somit keine Richtung mehr vorgibt. In diesem Falle sind beide Weichenzungen von der jeweiligen Schiene beanstandet, weisen also jeweils eine Lücke auf. Auch dies kann durch die Bildverarbeitung festgestellt werden. Es handelt sich dabei um eine Weichenstörung, die behoben werden muss. Der Zugverkehr muss so lange ruhen. Die Weiche kann durch die Bildverarbeitung zweifelsfrei identifiziert werden, so dass zur Reparatur Gleisarbeiter entsandt werden können.

Gemäß einer Ausgestaltung der Erfindung ist vorgesehen, dass ein von den Schienen eingeschlossener Gleisbereich ermittelt wird, wobei hierbei die mindestens eine anliegende Weichenzunge berücksichtigt wird.

Als Gleisbereich im Sinne der Anmeldung ist somit derjenige Bereich zu verstehen, der zwischen den beiden Schienen des Gleises liegt. Die Schienen bilden hierbei sozusagen die äußere Begrenzung des Gleisbereiches, der auf diese Weise als Bestandteil des Schienenpfades erkannt werden kann. Mit anderen Worten ist der Gleisbereich diejenige Fläche, die den Schienenfahrt beschreibt. Diese ermöglicht insbesondere eine übersichtliche Darstellung des Schienenpfades (hierzu im Folgenden noch mehr).

Gemäß einer Ausgestaltung der Erfindung ist vorgesehen, dass die Bilddaten aus zwei Blickrichtungen aufgenommen werden, insbesondere eine Stereokamera hierzu verwendet wird. Besonders vorteilhaft kann vorgesehen werden, dass die Bilddaten als Bildelemente transformiert mit der virtuellen Realität als Augmented Reality ausgegeben werden.

Von einer Erzeugung einer Augmented Reality (im Folgenden kurz AR) im Sinne der Erfindung ist also zu sprechen, wenn einer vorher erzeugten virtuellen Realität (im Folgenden kurz VR) der Gleisanlage eine Markierung überlagert wird, die Bildelemente aus der erfindungsgemäßen Bildverarbeitung darstellt. Zu diesem Zweck muss erst eine Transformation der Bilddaten dahingehend erfolgen, dass diese als Bildelemente darstellbar sind. Anschließend wird eine VR auf einem Ausgabegerät, insbesondere einem Display, dargestellt. Die transformierten Bildelemente können dann dieser VR überlagert werden und schaffen so einen erweiternden Informationsgehalt. Daher entsteht aus der VR eine AR.

Die genannte Aufgabe wird alternativ mit dem eingangs angegebenen Anspruchsgegenstand (Überwachungsvorrichtung) erfindungsgemäß auch dadurch gelöst, dass die Überwachungsvorrichtung dazu eingerichtet ist, ein Verfahren gemäß einem der voranstehenden Ansprüche durchzuführen.

Mit der Vorrichtung lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Vorrichtung.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 ein Ausführungsbeispiel der erfindungsbemäßen Vorrichtung, also der Überwachungsvorrichtungen, die in einer Gleisanlage und an einem Schienenfahrzeug installiert sind, mit ihren Wirkzusammenhängen schematisch,
Figur 2 ein Ausführungsbeispiel der Computer-Infrastruktur der Vorrichtung in der Gleisanlage gemäß Figur 1 als Blockschaltbild, wobei die einzelnen dargestellten Funktionseinheiten als Programmmodule jeweils in einem oder mehreren Prozessoren ablaufen können und die Schnittstellen demgemäß softwaretechnisch oder hardwaretechnisch ausgeführt sein können,
Figur 3 ein Ausführungsbeispiel des erfindungsgemäßen Verfahrens als Flussdiagramm, wobei die Funktionseinheiten und Schnittstellen gemäß Figur 2 beispielhaft angedeutet sind,
Figur 4 ein Ausführungsbeispiel für die Ausgabe einer AR als Ergebnis der Durchführung des erfindungsgemäßen Verfahrens als schematisch Display-Ansicht.

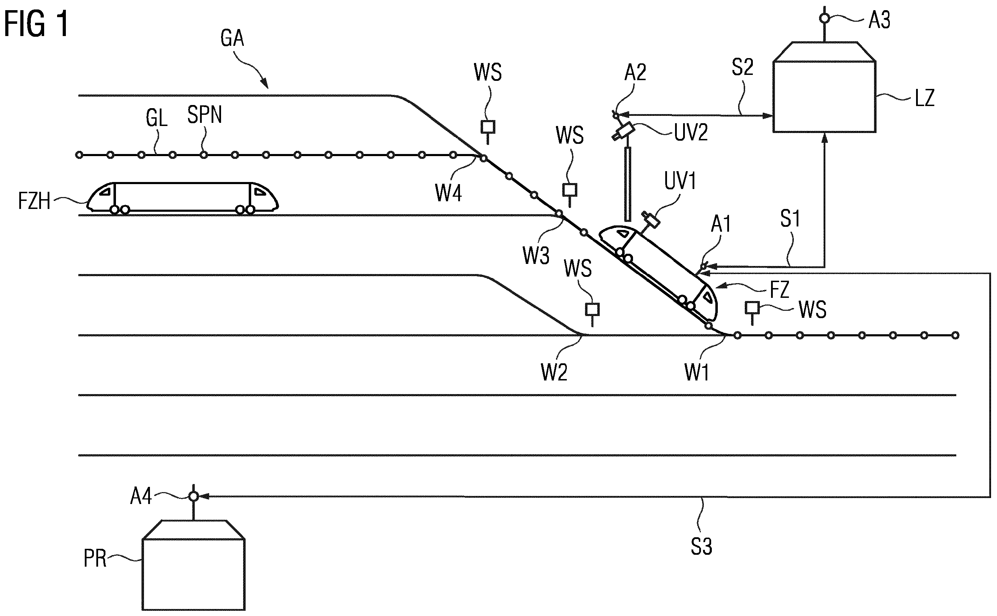

In Figur 1 ist eine Gleisanlage GA dargestellt, die aus mehreren Gleisen GL besteht. Ein Fahrzeug FZ soll in dieser Gleisanlage GA einen vorbestimmten Schienenpfad SPN abfahren, der durch nicht ausgefüllte Kugeln in FIG 1 angedeutet ist. Dabei passiert das Fahrzeug FZ die Weichen W1 und W3 und W4. Eine weitere Weiche W2 sind in FIG 1 ebenfalls dargestellt, liegt jedoch nicht auf dem Schienenpfad SP. Die Weichen W1 ...W4 weisen überdies Weichensignale WS auf.

Das Fahrzeug FZ weist außerdem eine Überwachungsvorrichtung UV1 auf. Diese weist, wie in FIG 1 angedeutet, eine Kamera auf, die außen am Fahrzeug FZ angebracht ist. Alternativ kann auch eine fest in der Gleisanlage GA installierte Überwachungsvorrichtung UV2 mit einer Kamera verwendet werden. Diese ermöglicht einen statischen Blick auf die Gleisanlage GA, könnte jedoch auch schwenkbar, beispielsweise auf einem Pfeiler oder einem Gebäudedach angeordnet sein.

Über Antennen A1, A2 kommunizieren die Überwachungsvorrichtungen UV1, UV2 unter Ausbildung einer ersten Schnittstelle S1 und einer zweiten Schnittstelle S2 mit einer Antenne A3, einer Leitzentrale LZ, wo die Bilddaten ausgewertet werden können. Alternativ ist es auch möglich, dass das Fahrzeug FZ selbst die Kamerabilder - zumindest der Überwachungsvorrichtung UV1 - auswertet, um beispielsweise ein autonomes Fahren zu unterstützen (hierzu im Folgenden noch mehr).

Weiterhin ist ein Provider PR dargestellt, der von der Gleisanlage GA eine virtuelle Realität erstellt. Dieses kann über eine Antenne A4 unter Ausnutzung einer dritten Schnittstelle S3 über die Antenne A1 zum Fahrzeug FZ übertragen werden, um das bereits erwähnte autonome Fahren zu unterstützen.

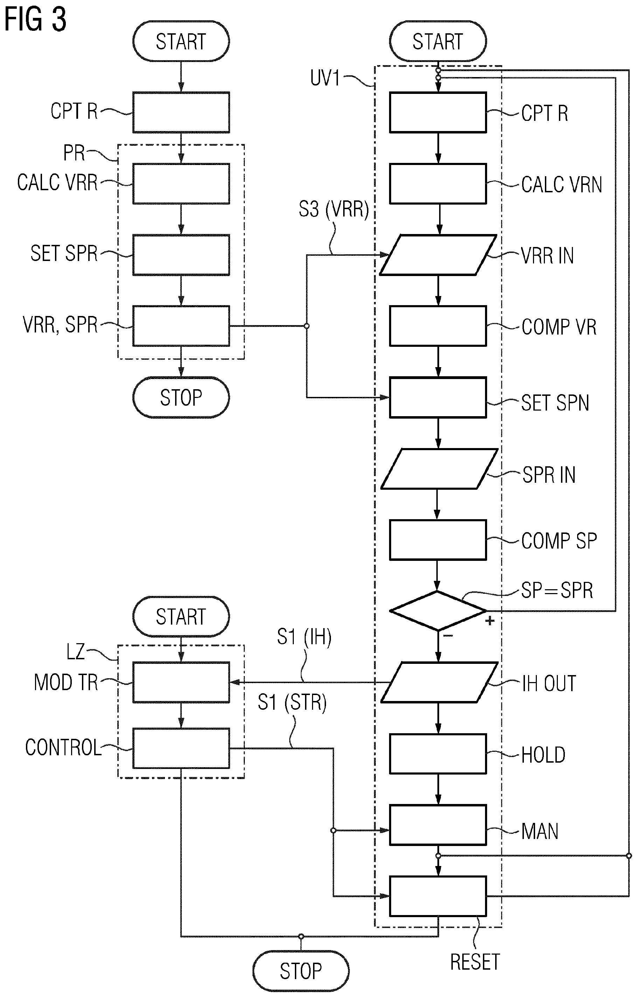

Um eine VR zu erzeugen, werden durch ein nicht dargestelltes Messfahrzeug in einem Erfassungsschritt CPT R der realen Gleisanlage die Messdaten an den Server SV des Dienstleisters PR übergegeben (Figur 1 in Verbindung mit Figur 3). Eine Verarbeitung der Messdaten dahingehend, dass aus diesen eine konkret eine virtuelle Referenzrealität VRR, beispielsweise in Form einer Punktewolke, erzeugt wird, ist an sich bekannt, und erfolgt in einem Berechnungsschritt CALC VRR, so dass die virtuelle Referenzrealität für spätere Vergleiche zur Verfügung steht. Weiterhin können aus den Daten der virtuellen Referenzrealität VRR mögliche Referenzschienenpfade SPR abgeleitet werden, die durch verschiedene Weichenstellungen der weichen W1 ... W4 ermöglicht werden. Diese stehen dann für einen späteren Vergleich von durch die Überwachungsvorrichtungen UV1, UV2 ermittelten Schienenpfade der zur Verfügung.

Die Daten der virtuellen Realität werden dann in der Speichereinheit SE1 abgelegt (diese kann, durch einen Cloud-Service (nicht dargestellt) zur Verfügung gestellt werden, oder durch den Provider PR beispielsweise in einer Speichereinheit abgelegt werden.

Ein autonomes Fahren ist dazu geeignet, mit dem durch die Überwachungsvorrichtung UV1 aufgenommenen Bildern den Schienenpfad SP zu erkennen. Weiterhin kann erkannt werden, dass ein als Hindernis in der Gleisanlage geparktes Fahrzeug FZH die Fahrt des Fahrtzeugs FZ behindert oder nicht. In FIG 1 dargestelltem Beispiel ist das Fahrzeug FZH außerhalb des Schienenpfades SP geparkt und die Weichen W1 und W3 sind richtig gestellt. Daher ist eine Kollision nicht zu erwarten. Wie eine solche Ermittlung über die Bilddaten der Überwachungsvorrichtung UV1 erfolgen kann, wird im Folgenden noch näher erläutert.

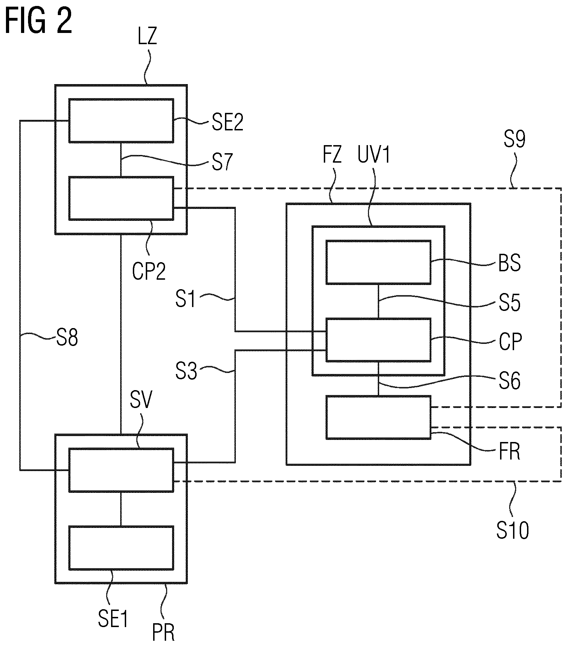

In FIG 2 ist dargestellt, wie einzelne Hardwarekomponenten des Providers PR, des Fahrzeuges FZ und der Leitzentrale LZ miteinander kommunizieren können, um das erfindungsgemäße Verfahren durchzuführen. Wie bereits erläutert, ist im Fahrzeug FZ die Überwachungsvorrichtung UV1 angeordnet. Diese weist einen Bildsensor BS sowie einen Computer CP auf, wobei der Computer CP eine Bildverarbeitung vornehmen kann. Der Computer CP kann weiterhin mit einem Fahrzeugrechner FR zusammenarbeiten, was über eine sechste Schnittstelle S6 sichergestellt wird.

Weiterhin weist der Computer CP die erste Schnittstelle S1 zu einem Computer CP2 der Leitzentrale LZ auf. Hier können die Ergebnisse einer Bildverarbeitung ebenfalls berücksichtigt werden, zum Beispiel auch bei der Leitung anderer Fahrzeuge. Außerdem ist der Computer CP2 über eine siebte Schnittstelle S7 mit der Speichereinheit SE2 verbunden, sodass Daten für spätere Zugsteuerungen abgelegt werden können. Auch ist es möglich, in der Speichereinheit SE2 Daten der VR abzuspeichern, die der Provider PR über einen Server SV unter Nutzung einer achten Schnittstelle S8 zur Verfügung stellen kann.

Der Provider PR weist ebenfalls eine erste Speichereinheit SE1 auf, die zur Speicherung der vorher ermittelten VR der Gleisanlage GA (vgl. FIG 1) dient. Der Server SV übernimmt bei Anforderung die Übertragung von Daten der VR. Dies erfolgt u.a. auch über die dritte Schnittstelle S3, wenn der Computer CP der Überwachungsvorrichtung UV1 die Daten anfordert.

Erwähnt werden sollen auch alternative Schnittstellen. So kann über eine neunte Schnittstelle S9 auch eine Übertragung von Daten des Computers CP2 der Leitzentrale LZ direkt an den Fahrzeugrechner FR und andersherum erfolgen. Hierdurch ist es möglich, dass die Leitzentrale LZ in an sich bekannter Weise Einfluss auf die Steuerung des Fahrzeugs über den Fahrzeugrechner FR erlangt. Im Falle eines autonomen Fahrens erfolgt die Steuerung des Fahrzeugs FZ allerdings hauptsächlich über den Fahrzeugrechner FR, wobei dieser über den Computer CP mit den dafür erforderlichen Informationen versorgt wird. Dabei kann im Übrigen auch eine alternative zehnte Schnittstelle S10 genutzt werden, um die Daten der VR von dem Server SV direkt auf den Fahrzeugrechner FR zu übertragen. In diesem Falle kann eine Aufgabenteilung zwischen dem Computer CP sowie dem Fahrzeugrechner FR hinsichtlich einer Steuerung des autonomen Fahrens erfolgen.

In FIG 3 ist das erfindungsgemäße Verfahren mit drei Teilabläufen dargestellt. Der Teilablauf links oben wird gestartet, um die Gleisanlage GA als virtuelle Referenzrealität VRR zu ermitteln. Weiterhin wird die virtuelle Referenzrealität VRR, wie bereits erläutert, auf Referenzschienenpfade SPR untersucht und die Ergebnisse zu einem späteren Abruf abgespeichert. Dies erfolgt beim Provider PR und wurde zu FIG 1 bereits näher erläutert.

Für ein autonomes Fahren wird im Fahrzeug FZ (vgl. FIG 1) die Überwachungsvorrichtung UV1 gestartet. Zunächst wird in einem Erfassungsschritt CPT R der Realität der Gleisanlage GA der Bildsensor BS gemäß FIG 2 verwendet. Die so ermittelten Bilddaten werden in einem Berechnungsschritt CALC VRN bearbeitet, um eine virtuelle Realität zu erzeugen. Wie noch genauer erläutert wird, wird dieser Schritt später wiederholt. Durch einen nachfolgenden Eingabeschritt VRR IN wird es daher möglich, die ermittelte virtuelle Realität VRN mit der virtuellen Referenzrealität VRR in einem Vergleichsschritt der virtuellen Realitäten COMP VR zu vergleichen.

Weiterhin wird ein Erkennungsschritt SET SPN für den Schienenpfad vor dem Fahrzeug durchgeführt. Dieser Schritt dient dazu, voraussagen zu können, welchen Weg das Fahrzeug durch die Gleisanlage nehmen wird. Ist dieser bekannt, werden vom Provider PR in einem Eingabeschritt SPR IN die Referenzschienenpfade übernommen, damit der ermittelte Schienenpfad SPN einer Plausibilitätsprüfung unterworfen werden kann. Dies erfolgt in einem Vergleichsschritt COMP SP der Schienenpfade, wobei der ermittelte Schienenpfad SPN einem möglichen Referenzschienenpfad SPR entsprechen muss. In einem nachfolgenden Vergleichsschritt SP = SPR wird abgefragt, ob der ermittelte Schienenpfad SPN zur Verfügung steht und, wenn diese Abfrage positiv ist, das Verfahren beginnend mit dem Verfahrensschritt CPT R erneut durchgeführt.

Sollte der ermittelte Schienenpfad SPN keinem Schienenpfad SPR entsprechen, so wird ein Ausgabeschritt IH OUT für ein Hindernis durchgeführt. Eine entsprechende Information IH über ein Hindernis wird dann an die Leitzentrale LZ ausgegeben, und das Fahrzeug FZ in einen Warteschritt HOLD überführt, um eventuelle Unfälle zu vermeiden.

In der Leitzentrale LZ kann dann ein Modifikationsschritt MOD TR für den Zugverkehr durchgeführt werden. Dies bedeutet, dass auf das Hindernis Rücksicht genommen wird, sodass es nicht zu einem Unfall kommt. In diesem Fall wird eine Kontrollübernahme für den Zugverkehr CONTROL durchgeführt, sodass die Leitzentrale LZ im Ausführungsbeispiel gemäß FIG 3 in das autonome Fahren des Fahrtzeugs FZ eingreift. Es werden Steuerdaten STR über die Schnittstelle S1 an das Fahrzeug übergeben, wodurch ein manueller Zugbetrieb MAN ermöglicht wird. Dieser kann beispielsweise über die Leitzentrale LZ ferngesteuert erfolgen. Alternativ (nicht dargestellt) können die modifizierten Daten auch an das autonom fahrende Fahrzeug FZ gegeben werden, sodass diese bei der autonomen Zugsteuerung berücksichtigt werden können.

Die manuelle Steuerung kann auch darin bestehen, dass das Hindernis entfernt werden muss, bevor ein weiterer Zugbetrieb möglich ist. Dies wäre zum Beispiel im Falle eines umgestürzten und auf dem Gleis liegenden Baumes der Fall. Nach Entfernung oder Umgehung des Hindernisses wird in einem Rückkehrschritt RESET zur autonomen Zugführung das Verfahren wieder in Gang gesetzt und ab dem Verfahrensschritt CPT R wiederholt. Wenn das Fahrzeug sein Ziel erreicht hat, wird das Verfahren gestoppt.

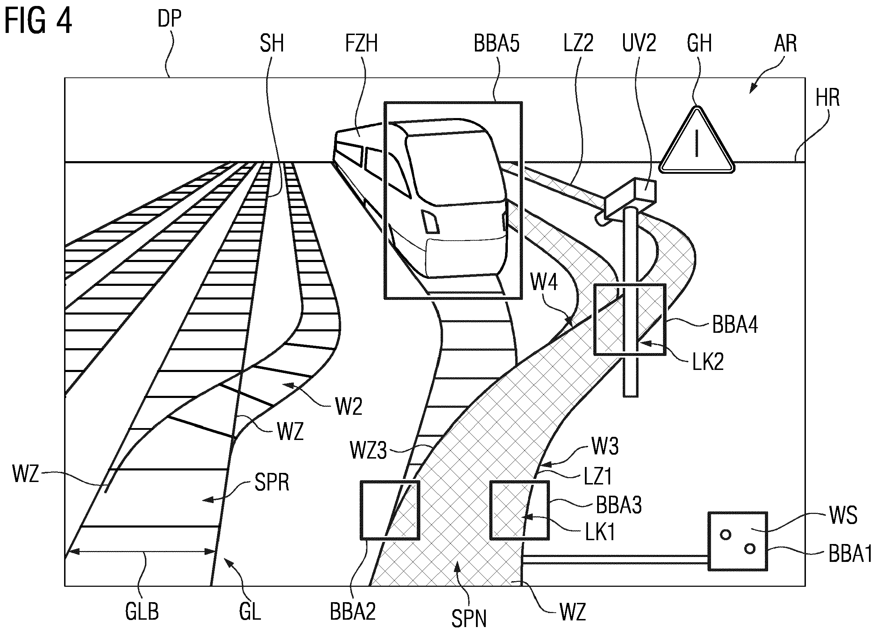

In FIG 4 ist ein Beispiel dargestellt, wie eine ermittelte virtuelle Realität VRN als Augmented Reality AR auf einem Display DP dargestellt werden kann. Zu erkennen ist der Horizont HR und eine vereinfachte Umgebung mit den Gleisen GL der Gleisanlage GA gemäß FIG 1. Die Schienen SH der Gleise GL definieren Geleisbereiche GLB, die in dem Display als Flächen zu erkennen sind. Außerdem ist das als Hindernis auf den Gleisen stehende Fahrzeug FZH zu erkennen. Die Weichen sind jeweils vereinfacht dargestellt. Man sieht von den Gleisen GL jeweils die Schienen SH, die im Bereich der Weichen auch in die Weichenzungen WZ münden.

Je nach Weichenstellung liegen die Weichenzungen WZ jeweils an den Schienen SH an oder es bildet sich zwischen der Schiene SH und der Weichenzunge eine Lücke LK1.

Anhand von Linienzügen LZ1 ... LZ3 kann durch eine Auswertung der Bilddaten der Schienenpfad SPN bestimmt werden. Zu diesem Zweck und zur Bestimmung von Hindernissen werden gemäß FIG 4 besondere Bildausschnitte BBA1 ... BBA5 ausgewertet. Diese sollen im Folgenden näher erläutert werden.

Der besondere Bildausschnitt BBA1 enthält ein Weichensignal WS. Dieser Bildausschnitt kann dahingehend untersucht werden, welche Weichenstellung das Weichensignal WS anzeigt. Hierdurch lässt sich eine Information erlangen, die für die Bestimmung des Schienenpfades SPN genutzt werden kann.

Die beiden Bildausschnitte BBA2 und BBA3 können ausgewählt werden, wenn bei dem Verfahren die Anwesenheit der Weiche W3 erkannt wurde. Während im besonderen Bildausschnitt BBA2 zu erkennen ist, dass die Weichenzunge WZ an der zugehörigen Schiene anliegt und daher der Linienzug LZ1 gebildet wird, zeigt der besondere Bildausschnitt BBA3, dass die Weichenzunge WZ dort nicht an der Schiene anliegt, so dass der Linienzug LZ1 von dieser Weichenzunge nicht gebildet wird (Ausbildung der Lücke LK1)

Die Linienzüge LZ1, LZ3 rahmen den Schienenpfad SPN sozusagen ein. Deswegen kann dieser in der AR auch hervorgehoben werden, in FIG 4 durch eine Kreuzschraffur angedeutet, die somit in dem Gleisbereich GLB liegt.

Ein weiterer besonderer Bildausschnitt BBA4 wurde markiert, weil sich hier die Lücke LK2 im Linienzug des Schienenpfades SPN befindet und daher den Linienzug am rechten Rand in den Linienzug LZ1 und den Linienzug LZ2 teilt. Anhand des besonderen Bildausschnittes BBA4 erkennt das Programm jedoch, dass es ich um kein Hindernis, sondern die Überwachungsvorrichtung UV2 handelt, weswegen, der Schienenpfad SPN trotz der Lücke markiert wird.

Jedoch verdeckt die Überwachungsvorrichtung UV2 auch die Weichenzungen der Weiche W4, sodass aus der Perspektive entsprechend der Darstellung gemäß FIG 4 nicht zweifelsfrei der Schienenpfad SPN hinter der vierten Weiche W4 bestimmt werden kann. Deswegen sind beide von der vierten Weiche W4 wegführenden Gleise GL als Schienenpfad SPN gekennzeichnet. Somit hat die Überwachungsvorrichtung UV2 als Hindernis indirekt eine Auswirkung darauf, dass der Betrieb eines Fahrzeugs gestört werden könnte.

Das als Hindernis abgestellte Fahrzeug FZH wird durch den besonderen Bildausschnitt BBA5 erfasst. Es wird deutlich, dass auch durch dieses Fahrzeug FZH eine Lücke im Linienzug des betreffenden Gleises entsteht, da dieser die Schiene verdeckt. Somit wird das Fahrzeug FZH als Hindernis erkannt, wobei dieses bei der augenblicklichen Weichenstellung der dritten Weiche W3 auf die Fahrt des Fahrzeuges keine Auswirkungen hat.

In der AR sind die besonderen Bildausschnitte BBA1 ... BBA5 durch Rahmen hervorgehoben. Die Linienzüge LZ1 ... LZ3, die als Schienenpfad SPN erkannt worden sind, sind als fette Linien hervorgehoben worden. Außerdem ist der durch den Schienenpfad SPN genutzte Gleisbereich GLB durch eine Kreuzschraffur hervorgehoben, sodass dieser sofort auffällt.

Die einzelnen Bildelemente der AR, die die VR ergänzen, könnten selbstverständlich auch durch farbliche Hervorhebungen oder Hervorhebungen in der Helligkeit der Darstellung realisiert werden. Auch andere Hervorhebungen sind denkbar. So zum Beispiel als Gefahrenhinweis GH in Form eines Gefahrenschildes, wie dies aus dem Straßenverkehr bekannt ist.

Ein Display in der dargestellten Weise in FIG 4 kann beispielsweise in der Leitzentrale LZ Verwendung finden, um einen Mitarbeiter, der verantwortlich für den Zugleitbetrieb ist, intuitiv von drohenden Gefahren in Kenntnis zu setzen. Auch könnte ein solches Display in einem Fahrzeug Verwendung finden, welches nicht autonom gesteuert wird, sondern von einem Zugführer betrieben wird. Diesem wird durch die Darstellung von potenziellen Gefahrenbereichen eine intuitive Zugführung ermöglicht.

### Bezugszeichenliste

- GA: Gleisanlage
- GL: Gleis
- SH: Schiene
- GLB: Gleisbereich
- SPN: Schienenpfad
- SPR: Referenzschienenpfad
- W1 ... W4: Weiche
- WZ: Weichenzunge
- WS: Weichensignal
- PR: Provider
- SV: Server
- SE1 ... SE2: Speichereinheit
- FZ: Schienenfahrzeug
- FR: Fahrzeugrechner
- UV1 ... UV2: Überwachungsvorrichtung
- BS: Bildsensor
- CP1 ... CP2: Computer
- A1 ... A4: Antenne
- S1 ... S10: Schnittstelle
- BBA1 ... BBA5: besonderer repräsentativer Bildausschnitt
- LZ1 ... LZ3: Linienzug
- LK1 ... LK2: Lücke
- GH: Gefahrenhinweis
- VRN: virtuelle Realität
- VRR: virtuelle Referenzrealität
- AR: Augmented Reality
- FZH: Fahrzeughindernis
- IH: Information über ein Hindernis
- STR: Steuerdaten
- DP: Display
- HR: Horizont
- CPT R: Erfassungsschritt Realität
- CALC VRR: Berechnungsschritt virtuelle Referenzrealität
- SET SPR: Erkennungsschritt Referenzschienenpfade
- CALC VRN: Berechnungsschritt für virtuelle Realität
- VRR IN: Eingabeschritt für virtuelle Referenzrealität
- COMP VR: Vergleichsschritt der virtuellen Realitäten
- SET SPN: Erkennungsschritt für den Schienenpfad
- SPR IN: Eingabeschritt für Referenzschienenpfade
- COMP SP: Vergleichsschritt für Schienenpfade
- IH OUT: Ausgabeschritt für ein Hindernis
- HOLD: Warteschritt
- MAN: Manueller Zugbetrieb
- MOD TR: Modifikationsschritt für den Zugverkehr
- CONTROL: Kontrollübernahme für den Zugverkehr
- RESET: Rückkehrschritt zur autonomen Zugführung

## Patentansprüche

1. Verfahren zum Ermitteln eines gleisgebundenen Schienenpfades (SPN) in einer Gleisanlage (GA), bei dem der Schienenpfad (SPN) anhand von repräsentativen Bildausschnitten bestimmt wird, indem rechnergestützt
• mit einem Bildsensor (BS) Bilddaten der Gleisanlage (GA) aufgenommen werden,
• aus den Bilddaten die repräsentativen Bildausschnitte ermittelt werden,
• besondere repräsentative Bildausschnitte ausgewählt werden, anhand derer Lücken (LK1 ...LK2) klassifiziert werden,
• diejenigen besonderen repräsentativen Bildausschnitte ermittelt werden, die die Anwesenheit von Weichen (W1 ... W4) im Schienenpfad (SPN) repräsentieren;
**dadurch gekennzeichnet, dass**:
• als besonderer repräsentativer Bildausschnitt (BBA2 ... BBA3) die Bilddaten mindestens einer Weichenzunge (WZ) einer Weiche (W1 ... W4) ausgewertet werden,
• dieser besondere repräsentative Bildausschnitt hinsichtlich einer Weichenstellung ausgewertet wird, und so die Weichenstellung ermittelt wird, indem
• der Schienenpfad (SPN) dadurch bestimmt wird, dass der Verlauf jeder Schiene des betreffenden Gleises (GL) als entsprechender Linienzug erfasst wird,
• geprüft wird, ob die Linienzüge besagte Lücken (LK1 ... LK2) in ihrem Verlauf aufweisen, wobei
• zum Ermitteln des Schienenpfades (SPN) berücksichtigt wird:
∘ ob die mindestens eine Weichenzunge (WZ) an der Schiene (SH) anliegt und die Linienzüge in diesem Fall weitergeführt werden können oder
∘ ob die mindestens eine Weichenzunge von der Schiene eine Lücke (LK1) aufweist und in diesem Fall die Linienzüge eine Lücke aufweisen;
• der durch die Linienzüge eingerahmte Schienenpfad (SPN) unter Berücksichtigung der Weichenstellung ermittelt wird.

2. Verfahren nach Anspruch 1,
**dadurch gekennzeichnet,**
**dass** die besonderen repräsentativen Bildausschnitte derart ausgewählt werden, dass diese mindestens eine Lücke (LK1 ... LK2) enthalten.

3. Verfahren nach einem der Ansprüche 1 oder 2,
**dadurch gekennzeichnet,**
**dass** der Bildsensor (BS) in oder auf einem Schienenfahrzeug (FZ) eingesetzt wird und mit dem Bildsensor (BS) Bilddaten des vor dem Schienenfahrzeug (FZ) liegenden Teils der Gleisanlage (GA) aufgenommen werden.

4. Verfahren nach einem der voranstehenden Ansprüche,
**dadurch gekennzeichnet,**
**dass** ein ermittelter Schienenpfad (SPN) auf eine Übereinstimmung mit einem Referenzschienenpfad (SPR) in einer virtuellen Referenzrealität verglichen wird.

5. Verfahren nach Anspruch 4,
**dadurch gekennzeichnet,**
**dass** bei dem Vergleichen des ermittelten Schienenpfades (SPN) mit dem Referenzschienenpfad (SPR) geprüft wird,
• ob die Schienen (SH) in den Bilddaten derart als Linienzüge erfasst wurden, dass die Linienzüge (LZ1 ... LZ3) die in Bezug auf die virtuelle Realität (VRN) zu erwartende Länge aufweisen, oder
• ob mindestens einer dieser Linienzüge unerwartete Lücken (LK1 ... LK2) aufweist, die diesen mindestens einen Linienzug (LZ1 ... LZ3) in Bezug auf seine zu erwartende Länge unterbrechen.

6. Verfahren nach Anspruch 5,
**dadurch gekennzeichnet,**
**dass** eine Ausgabe erfolgt, wenn mindestens ein Linienzug (LZ1 ... LZ3) eine unerwartete Lücke (LK1 ... LK2) aufweist.

7. Verfahren nach Anspruch 6,
**dadurch gekennzeichnet,**
**dass** die ermittelte Lücke (LK2) als Hindernis interpretiert wird.

8. Verfahren nach Anspruch 7,
**dadurch gekennzeichnet,**
**dass** die Ausgabe eine Information enthält, dass auf dem Schienenpfad (SPN) ein Hindernis vorhanden ist.

9. Verfahren nach einem der voranstehenden Ansprüche,
**dadurch gekennzeichnet,**
**dass** als besonderer repräsentativer Bildausschnitt (BBA1) die Bilddaten eines Weichensignals (WS) ausgewertet werden.

10. Verfahren nach einem der voranstehenden Ansprüche,
**dadurch gekennzeichnet,**
**dass** ein von den Schienen (SH) eingeschlossener Gleisbereich (GLB) ermittelt wird, wobei hierbei die mindestens eine anliegende Weichenzunge (WZ) berücksichtigt wird.

11. Verfahren nach einem der voranstehenden Ansprüche,
**dadurch gekennzeichnet,**
**dass** die Bilddaten aus zwei Blickrichtungen aufgenommen werden, insbesondere eine Stereokamera hierzu verwendet wird.

12. Verfahren nach einem der voranstehenden Ansprüche,
**dadurch gekennzeichnet,**
**dass** die Bilddaten mit der virtuellen Realität transformiert und die mit der virtuellen Realität transformierten Bilddaten als Augmented Reality (AR) ausgegeben werden.

13. Überwachungsvorrichtung (UV1 ... UV2) mit einem Bildsensor (BS) und einem an diesen angeschlossenen Computer (CP)
**dadurch gekennzeichnet,**
**dass** die Überwachungsvorrichtung (UV1 ... UV2) dazu eingerichtet ist, ein Verfahren gemäß einem der voranstehenden Ansprüche durchzuführen.

14. Computerprogrammprodukt mit Programmbefehlen zur Durchführung des Verfahrens nach einem der Ansprüche 1 - 12.

15. Bereitstellungsvorrichtung für das Computerprogrammprodukt nach Anspruch 14, wobei die Bereitstellungsvorrichtung das Computerprogrammprodukt speichert und/oder bereitstellt.

## Claims

1. Method for ascertaining a track-bound rail path (SPN) in a track installation (GA), in which the rail path (SPN) is determined on the basis of representative image extracts, in which, in a computer-assisted manner,
• an image sensor (BS) is used to record image data of the track installation (GA),
• the representative image extracts are ascertained from the image data,
• particular representative image extracts are selected, on the basis of which gaps (LK1 ... LK2) are classified,
• those particular representative image extracts which represent the presence of sets of points (W1 ... W4) in the rail path (SPN) are ascertained;
**characterised in that**
• the image data of at least one point blade (WZ) of a set of points (W1 ... W4) is evaluated as a particular representative image extract (BBA2 ... BBA3),
• said particular representative image extract is evaluated with regard to a points setting, and thus the points setting is ascertained, by
• the rail path (SPN) being determined by the course of each rail of the track (GL) in question being captured as a corresponding polygonal chain,
• it being checked whether the polygonal chains have said gaps (LK1 ... LK2) in their course, wherein
• in order to ascertain the rail path (SPN), it is taken into consideration:
o whether the at least one point blade (WZ) is contacting the rail (SH) and the polygonal chains in this case can be continued or
o whether the at least one point blade has a gap (LK1) from the rail and, in this case, the polygonal chains have a gap;
• the rail path (SPN) framed by the polygonal chains is ascertained while taking into consideration the points setting.

2. Method according to claim 1,
**characterised in that**
the particular representative image extracts are selected in such a manner that they contain at least one gap (LK1 ... LK2).

3. Method according to one of claims 1 or 2,
**characterised in that**
the image sensor (BS) is used in or on a rail vehicle (FZ) and the image sensor (BS) is used to record image data of the part of the track installation (GA) that lies ahead of the rail vehicle (FZ).

4. Method according to one of the preceding claims,
**characterised in that**
an ascertained rail path (SPN) is compared with a reference rail path (SPR) in a virtual reference reality for a match.

5. Method according to claim 4,
**characterised in that**
when comparing the ascertained rail path (SPN) with the reference rail path (SPR), it is checked
• whether the rails (SH) in the image data have been captured as polygonal chains in such a manner that the polygonal chains (LZ1 ... LZ3) have the length to be expected in relation to the virtual reality (VRN), or
• whether at least one of these polygonal chains has unexpected gaps (LK1 ... LK2), which interrupt said at least one polygonal chain (LZ1 ... LZ3) in relation to its length to be expected.

6. Method according to claim 5,
**characterised in that**
an output takes place if at least one polygonal chain (LZ1 ... LZ3) has an unexpected gap (LK1 ... LK2).

7. Method according to claim 6,
**characterised in that**
the ascertained gap (LK2) is interpreted as an obstacle.

8. Method according to claim 7,
**characterised in that**
the output contains an item of information that an obstacle is present on the rail path (SPN).

9. Method according to one of the preceding claims,
**characterised in that**
the image data of a points signal (WS) is evaluated as a particular representative image extract (BBA1).

10. Method according to one of the preceding claims,
**characterised in that**
a track region (GLB) that is enclosed by the rails (SH) is ascertained, wherein in this context the at least one contacting point blade (WZ) is taken into consideration.

11. Method according to one of the preceding claims,
**characterised in that**
the image data is recorded from two viewing directions, in particular a stereoscopic camera is used for this purpose.

12. Method according to one of the preceding claims,
**characterised in that**
the image data is transformed with the virtual reality and the image data transformed with the virtual reality is output as augmented reality (AR).

13. Monitoring apparatus (UV1 ... UV2) with an image sensor (BS) and a computer (CP) connected thereto,
**characterised in that**
the monitoring apparatus (UV1 ... UV2) is configured to perform a method according to one of the preceding claims.

14. Computer program product with program commands for performing the method according to one of claims 1 - 12.

15. Provision apparatus for the computer program product according to claim 14, wherein the provision apparatus stores and/or provides the computer program product.

## Revendications

1. Procédé de détermination du chemin (SPN) d'un rail dans une voie (GA) ferrée, dans lequel on détermine le chemin (SPN) du rail à l'aide de parties d'image représentatives, dans lequel assisté par ordinateur
• on enregistre, par un capteur (BS) d'image, des données d'image de la voie (GA) ferrée,
• à partir des données d'image, on détermine les parties d'image représentatives,
• on sélectionne des parties d'image particulièrement représentatives, à l'aide desquelles on classe des interruptions (LK1 ... LK2),
• on détermine les parties d'image particulièrement représentatives, qui représente la présence d'aiguillages (W1 ... W4) dans le chemin (SPN) de rail ;
**caractérisé en ce que**
• on évalue, comme parties (BBA2 ... BBA3) d'image particulièrement représentatives, les données d'image d'au moins une lame (WZ) d'aiguille d'un aiguillage (W1 ... W4),
• on évalue ces parties d'image particulièrement représentatives en ce qui concerne une position de l'aiguillage et on détermine ainsi la position de l'aiguillage, en
• déterminant le chemin (SPN) du rail par le fait que l'on détecte le tracé de chaque rail de la voie (GL) concernée sous la forme d'un contour linéaire correspondant,
• en contrôlant, si les contours linéaires ont dans leur tracé lesdites interruptions (LK1 ... LK2), dans lequel
• pour la détermination du chemin (SPN) du rail, on prend en compte :
∘ si la au moins une lame (WZ) d'aiguille s'applique au rail (SH) et si les contours linéaires peuvent être continués dans ce cas ou
∘ si la au moins une lame d'aiguille du rail a une interruption (LK1) et dans ce cas, les contours linéaires ont une interruption ;
• on détermine le chemin (SPN) du rail encadré par les contours linéaires en tenant compte de la position de l'aiguillage.

2. Procédé suivant la revendication 1,
**caractérisé**
**en ce que** l'on choisit les parties d'image particulièrement représentatives, de manière à ce qu'elles contiennent une interruption (LK1 ... LK2).

3. Procédé suivant l'une des revendications 1 ou 2,
**caractérisé**
**en ce que** l'on utilise le capteur (BS) d'image dans ou sur un véhicule (FZ) ferroviaire et, par le capteur (BS) d'image, on enregistre des données d'image de la partie de la voie (GA) ferrée se trouvant devant le véhicule (FZ) ferroviaire.

4. Procédé suivant l'une des revendications précédentes,
**caractérisé**
**en ce que** l'on compare, dans une réalité de référence virtuelle, un chemin (SPN) de rail déterminé pour savoir s'il coïncide avec un chemin (SPR) de rail de référence.

5. Procédé suivant la revendication 4,
**caractérisé**
**en ce que**, lors de la comparaison du chemin (SPN) de rail déterminé au chemin (SPR) de rail de référence, on contrôle,
• si les rails (SH), dans les données d'image, ont été détectés comme contours linéaires, de manière à ce que les contours (LZ1 ... LZ3) linéaires aient la longueur à escompter par rapport à la réalité (VRN) virtuelle, ou
• si au moins l'un de ces tracés linéaires a des interruptions (LK1 ... LK2) inattendus, qui interrompent ce au moins un tracé (LZ1 ... LZ3) linéaire, en ce qui concerne sa longueur à escompter.

6. Procédé suivant la revendication 5,
**caractérisé**
**en ce que** l'on effectue une édition, lorsqu'au moins un contour (LZ1 ... LZ3) linéaire a une interruption (LK1 ... LK2) inattendue.

7. Procédé suivant la revendication 6,
**caractérisé**
**en ce que** l'on interprète les interruptions (LK2) déterminées comme un obstacle.

8. Procédé suivant la revendication 7,
**caractérisé**
**en ce que** l'édition contient une information suivant laquelle il y a un obstacle sur le chemin (SPN) du rail.

9. Procédé suivant l'une des revendications précédentes,
**caractérisé**
**en ce que** l'on évalue, comme parties (BBA1) d'image particulièrement représentatives, les données d'image d'un signal (WS) d'aiguillage.

10. Procédé suivant l'une des revendications précédentes,
**caractérisé**
**en ce que** l'on détermine une partie (GLB) de voie inclue par les rails (SH), dans lequel à cet effet, on prend en compte la au moins une lame (WZ) d'aiguille appliquée.

11. Procédé suivant l'une des revendications précédentes,
**caractérisé**
**en ce que** l'on enregistre les données d'image dans deux directions de vue en utilisant, en particulier à cet effet, une caméra stéréo.

12. Procédé suivant l'une des revendications précédentes,
**caractérisé**
**en ce que** l'on transforme les données d'image par la réalité virtuelle et on édite les données d'image transformées par la réalité virtuelle sous la forme d'une réalité (AR) augmentée.

13. Installation (UV1 ... UV2) de contrôle comprenant un capteur (BS) d'image et un ordinateur (CP), qui lui est raccordé,
**caractérisé**
**en ce que** l'installation (UV1 ... UV2) de contrôle est agencée pour effectuer un procédé suivant l'une des revendications précédentes.

14. Produit de programme d'ordinateur comprenant des instructions de programme pour effectuer le procédé suivant l'une des revendications 1 à 12.

15. Installation de mise à disposition du produit de programme d'ordinateur suivant la revendication 14, dans lequel l'installation de mise à disposition met en mémoire et/ou met à disposition le produit de programme d'ordinateur.
